# EUROPÄISCHE PATENTANMELDUNG

(11) **EP 2 608 394 A1**
(43) Veröffentlichungstag der Anmeldung: **26.06.2013**
(21) Anmeldenummer: 11194186.0
(22) Anmeldetag: 19.12.2011
(51) Int. Cl.: H02M 7/5387, H02P 29/02

(54) **Stromrichterschaltung**

(71) Anmelder: Siemens Aktiengesellschaft, 80333 München (DE)
(72) Erfinder: Köpken, Hans-Georg, Dr., 91056 Erlangen (DE)

(57) **Zusammenfassung**

Die Erfindung betrifft eine Stromrichterschaltung (4), die wenigstens zwei Submodule (24,26) in Reihenschaltung, die über eine Induktivität (22) elektrische Leistung aus einer eine Gleichspannung (18) abgebenden Leistungsquelle (8) bezieht, umfasst. Dabei weist jedes Submodul (24,26) eingangsseitig eine einphasige Halbbrücke und lastseitig eine einphasige Vollbrücke auf und die Halbbrücke und die Vollbrücke sind gleichspannungsseitig sowie parallel hierzu ein Zwischenkreiskondensator geschaltet. In der angegebenen Stromrichterschaltung ist in jedem Submodul (24,26) wenigstens eine elektrische Leitung aus mehreren zueinander parallel geschalteten Strompfade (42 bis 46) gebildet.

## Beschreibung

Die Erfindung betrifft eine Stromrichterschaltung gemäß dem Oberbegriff des Anspruchs 1, eine Leiterplatte und einen Elektromotor.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, in jedem Submodul der Stromrichterschaltung der eingangs genannten Art eine Leitung zum Führen einer elektrischen Leistung in mehrere zueinander parallel geschaltete Strompfade aufzuteilen.

Die Erfindung geht davon aus, dass in einem Submodul der Stromrichterschaltung der eingangs genannten Art die einzelnen Bauelemente durch eine Leitung mit einem einzigen Strompfad verbunden sind. Auf diesem einzigen Strompfad können jedoch kapazitätsbeschränkende Stellen, sogenannte Bottlenecks, auftreten, die nicht nur die maximal übertragbare Leistung bestimmen, die Gefahr einer negativen Beeinflussung anderer elektrischer Bauelemente durch diese kapazitätsbeschränkenden Stellen im Fehlerfall ist in der Regel am höchsten.

So können beispielsweise an einer Kontaktierungsstelle zwischen dem Submodul und einer angeschlossenen elektrischen Last Stromkonzentrationen auftreten, da sich an dieser Kontaktierungsstelle der elektrische Leitungswiderstand zwischen dem Submodul und der elektrischen Last ändert. Diese Stromkonzentrationen können die Funktionalität des Submoduls negativ beeinflussen und im Extremfall zum Ausfall der gesamten Schaltungsanordnung führen.

Demgegenüber schlägt die Erfindung vor, die elektrische Leistung nicht auf einem einzigen Strompfad, sondern auf mehreren zueinander parallel geschalteten Strompfaden zu verteilen. Auf diese Weise werden die Ströme an den kapazitätsbeschränkenden Stellen nicht nur auf die einzelnen Strompfade verteilt, wodurch letztendlich hohe Stromkonzentrationen vermieden werden können, negative Einflüsse einer fehlerhaften kapazitätsbeschränkenden Stelle in einem Strompfad führen nicht zwangsläufig zu einer negativen Beeinflussung der verbleibenden Strompfade im Submodul.

Die Erfindung gibt daher eine Stromrichterschaltung an, die wenigstens zwei Submodule in Reihenschaltung, die über eine Induktivität elektrische Leistung aus einer eine Gleichspannung abgebenden Leistungsquelle bezieht, umfasst. Dabei weist jedes Submodul eingangsseitig eine einphasige Halbbrücke und lastseitig eine einphasige Vollbrücke auf und die Halbbrücke und die Vollbrücke sind gleichspannungsseitig sowie parallel hierzu ein Zwischenkreiskondensator geschaltet. Erfindungsgemäß ist in jedem Submodul wenigstens eine elektrische Leitung aus mehreren zueinander parallel geschalteten Strompfade gebildet ist.

Durch die Verwendung mehrerer Strompfade auf einer Leitung in jedem Submodul kann das Ausfallrisiko im Fehlerfall reduziert werden, da die Gefahr einer negativen Beeinflussung eines Fehlers auf einem Strompfad auf das entsprechende Submodul geringer ist, als wenn ein einziger Strompfad verwendet werden würde. Dadurch wird nicht nur die Lebensdauer der Submodule gesteigert, das Ausfallrisiko der Submodule und damit der Stromrichterschaltung wird auch reduziert.

In einer besonderen Weiterbildung Erfindung ist die Vollbrücke aus einer der Strompfade entsprechenden Anzahl an Einzelvollbrücken aufgebaut und jeder Strompfad durch eine der Einzelvollbrücken geführt. Mit anderen Worten ist in den Submodulen der angegebenen Stromrichterschaltung für jeden Strompfad eine extra Vollbrückenschaltung bereitgestellt, die die elektrische Leistung von einem Eingang der Vollbrücke zu einem Ausgang der Vollbrücke leitet. Dieser Weitbildung liegt die Überlegung zugrunde, dass die Schalter einer Vollbrücke in der Regel als Halbleiterschalter ausgeführt sind. Diese weisen einen bestimmten Sättigungsstrom auf, so dass die durch die Vollbrücke führbare Leistung beschränkt ist. Durch eine Parallelschaltung mehrerer Halbleiterschalter könnte der Sättigungsstrom der Gesamtanordnung der Halbleiterschalter erhöht werden. Ein Fehler in einem der Schalter dieser Parallelschaltung beeinflusst jedoch den Stromfluss durch die restlichen Schalter dieser Parallelschaltung was dazu führen kann, dass die restlichen Schalter im Fehlerfall unter Bedingungen betrieben werden könnten, die sie beeinträchtigen oder gar zerstören können. Das Risiko einer solchen negativen Beeinflussung wird jedoch gesenkt, indem für jeden Strompfad eine eigene Vollbrücke und damit ein eigener Strompfad für jeden Schalter bereitgestellt werden.

In einer bevorzugten Weiterbildung der Erfindung ist an einem Ausgang jeder Einzelvollbrücke jeweils ein Strompfad der elektrischen Last kontaktierbar. Mit anderen Worten werden die einzelnen von der Last kommenden Strompfade, beispielsweise in Form von Drähten, zur Kontaktierung nicht zu einem einzigen Kontaktpunkt zusammengeführt, sondern sie werden einzeln mit den Strompfaden des jeweiligen Submoduls am Ausgang der Vollbrücke verbunden. Wenn das Submodul auf einer Leiterplatte ausgebildet ist, kann dies beispielsweise realisiert werden, indem die Drähte durch die Leiterplatte durchgesteckt und mit dieser verlötet werden.

In einer besonderen Weiterbildung der Erfindung ist der Zwischenkreiskondensator aus einer Anzahl der Strompfade entsprechenden Einzelzwischenkreiskondensatoren aufgebaut und jeder Einzelzwischenkreiskondensator mit einem der Strompfade kontaktiert. Um Blindleistungsschübe zur Leistungsquelle hin zwischenzuspeichern muss der Zwischenkreiskondensatorabschnitt eine gewisse Kapazität bereitstellen, da die Submodule keine elektrische Leistung an die elektrische Leistungsquelle abgegeben können, wenn die elektrische Leistungsabgabe an einen elektrischen Verbraucher leistungsgeregelt ist. Die Kapazität ist technisch umso aufwendiger und kostenintensiver, je höher sie ist. Durch Einsatz der Einzelkondensatoren, die durch die angegebene Weiterbildung parallel geschaltet sind, kann aus einer Vielzahl kleinerer und damit technisch einfach und kostengünstig umzusetzender Kapazitäten ebenfalls die oben genannte Kapazität umgesetzt werden, die zur Zwischenspeicherung der zur Leistungsquelle hin gerichteten Blindleistungsschübe notwendig ist.

In einer besonderen Weiterbildung der Erfindung ist die Halbbrücke aus einer Anzahl der Strompfade entsprechenden Einzelhalbbrücken aufgebaut. Dabei ist jede Einzelhalbbrücke mit einem der Strompfade verbunden.

In einer bevorzugten Weiterbildung ist jede Einzelhalbbrücke eingangsseitig mit einer Einzelinduktivität verbunden. Diese Einzelinduktivität realisiert zusammen mit jedem Halbbrückenabschnitt einen Hochsetzsteller, der es ermöglicht, eine durch die Leistungsquelle abgegebene Spannung zu erhöhen und so den einzelnen Submodulen, wie den oben genannten Vollbrücken, eine höhere Eingangsspannung bereitzustellen.

In einer anderen Weiterbildung umfasst die angegebene Stromrichterschaltung in jedem Submodul einen Potenzialausgleich, an dem die einzelnen Strompfade miteinander elektrisch verbunden sind. Auf diese Weise wird für alle Einzelelemente (Einzelvollbrücke, Einzelzwischenkreiskondensator, Einzelhalbbrücke) des Submoduls ein gemeinsames Bezugspotential definiert, das insbesondere eine technisch einfache Umsetzung der Ansteuerung und der Sensorik des Submoduls und damit des resultierenden Umrichters ermöglicht.

Die Erfindung gibt auch eine Leiterplatte an, die eine Schaltung mit einem angegebenen Submodul umfasst. Auf der Leiterplatte können alle Submodule mit ihren Einzelelementen gemeinsam als Schaltung aufgebracht sein. So verursachen die durch die Strompfade entstehenden parallelen Verbindungen vergleichsweise wenig Verdrahtungsaufwand.

Alternativ können auch mehrere Leiterplatten vorgesehen sein, auf denen einzelne oder mehrere Submodule als Schaltung aufgebracht sind. Dabei werden die Leiterplatten zu einem gemeinsamen Submodul verschaltet.

Die Erfindung gibt auch einen Elektromotor an, einen Rotor antreibende Motorwicklung und eine angegebene Leiterplatte umfasst. Diese Leiterplatte kann besonders bevorzugt in den Elektromotor integriert sein, so dass ein Zusammenbau eines Umrichters mit einem angegebenen Submodul und des Elektromotors werksseitig erfolgen kann und so der Endmontageaufwand erheblich vereinfacht wird.

In einer Weiterbildung der Erfindung ist die Motorwicklung aus einer Anzahl der Strompfade entsprechenden Anzahl an Einzelwicklungen aufgebaut, wobei jede Einzelwicklung mit einem der Strompfade elektrisch verbunden ist. Mit anderen Worten geht die Weiterbildung einen konsequenten Schritt und führt ein neues durchgängiges Konzept ein, wobei viele nebeneinander arbeitende Strompfade jeweils eine vollständige Schaltung realisieren, die an eine Leistungsquelle zum Antreiben eines Motors angeschlossen sind.

Die Erfindung gibt auch ein Fahrzeug an, das einen angegebenen Elektromotor zu seinem Antrieb umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, die im Zusammenhang mit den Zeichnungen näher erläutert werden, wobei:
- FIG 1: eine Schaltung mit einem beispielhaften Umrichter und
- FIG 2: ein Submodul des Umrichters der FIG 1 zeigen.

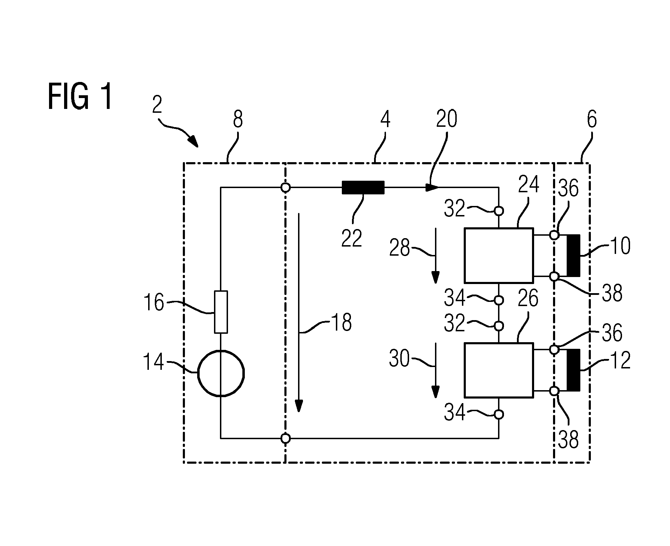

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung ein Motor und weist eine erste Last 10 in Form eines ersten Motorwicklungsabschnitts und eine zweite Last 12 in Form eines zweiten Motorwicklungsabschnitts auf.

Die elektrische Leistungsquelle 8 ist in der vorliegenden Ausführung eine Batterie 8, die sich in eine Spannungsquelle 14 mit einem dazu in Reihe angeschlossenen Innenwiderstand 16 zerlegen lässt. Die Batterie 8 legt an die Stromrichterschaltung 4 eine Batteriespannung 18 an und gibt an die Stromrichterschaltung 4 einen Batteriestrom 20 ab.

An die elektrische Leistungsquelle 8 schließt sich eingangsseitig an der Stromrichterschaltung 4 eine Reihenschaltung aus einer Induktivität 22, die beispielsweise eine Spule sein kann, einem ersten Submodul 24 und einem zweiten Submodul 26 an. An den Submodulen 24, 26 fällt entsprechend eine erste Teilspannung 28 und eine zweite Teilspannung 30 ab. Ferner sind an das erste und zweite Submodul 24, 26 entsprechend die erste und zweite Last 10, 12 angeschlossen. Basierend auf den Teilspannungen 28, 30 versorgen die Submodule 24, 26 auf diese Weise die Lasten 10, 12 mit elektrischer Energie in einer noch zu beschreibenden Weise. Für die Anzahl der Submodule 24, 26 und Lasten 10, 12 wurde in der vorliegenden Ausführung zwei gewählt. Die Stromrichterschaltung 4 kann jedoch eine beliebig hohe Anzahl an Submodulen 24, 26 besitzen und damit eine beliebig hohe Anzahl an Lasten 10, 12 speisen. Je mehr Submodule 24, 26 jedoch in der Reihenschaltung verschaltet sind, desto kleiner werden die entsprechenden Teilspannung 28, 30.

Jedes Submodul 24, 26 weist eine erste Eingangsklemme 32, eine zweite Eingangsklemme 34, eine erste Ausgangsklemme 36 und eine zweite Ausgangsklemme 38 auf. Während über den ersten und zweiten Eingangsklemmen 34, 36 jeweils die Teilspannungen 28 bis 30 abfallen, sind an die ersten und zweiten Ausgangsklemmen 38, 38 die Lasten 10, 12 angeschlossen.

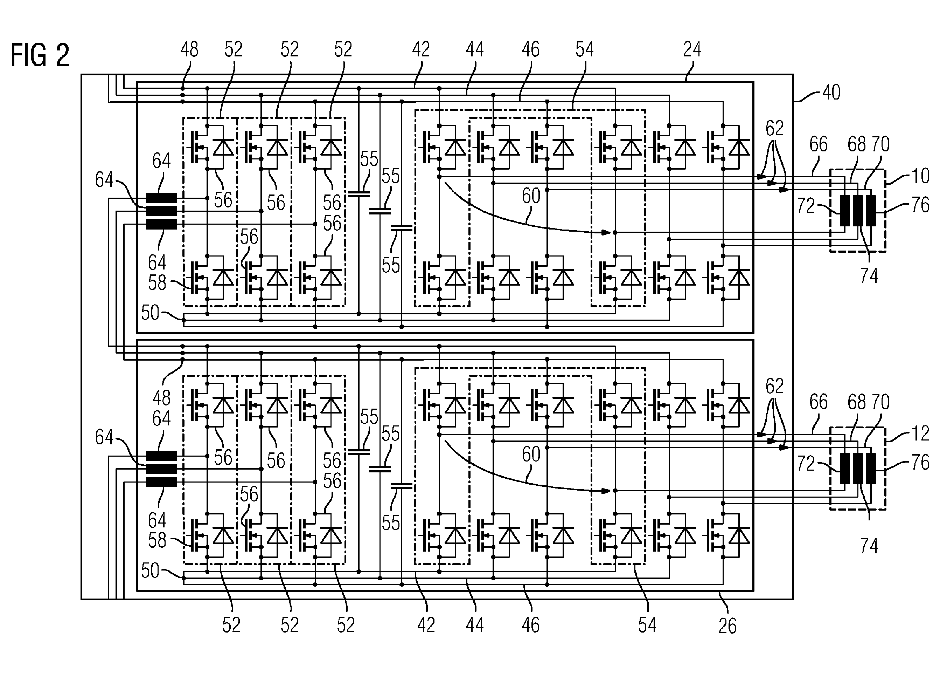

Es wird auf FIG 2 Bezug genommen, die einen beispielhaften Aufbau der Submodule 24, 26 in der Stromrichterschaltung 4 der FIG 1 auf einer Leiterplatte 40 zeigt.

Jedes Submodul 24, 26 ist aus einem ersten Strompfad 42, einem zweiten Strompfad 44 und einem dritten Strompfad 46 aufgebaut. Jeder dieser Strompfade 42 bis 46 realisiert eine eigene und unabhängige Teilschaltung der Stromrichterschaltung 4, wobei die Teilschaltungen in jedem Submodul 24, 26 an einem ersten Potentialausgleichspunkt 48 und an einem zweiten Potentialausgleichspunkt 50 miteinander verbunden sind. Mit anderen Worten sind die einzelnen Teilschaltungen miteinander parallel verschaltet.

Nachstehend soll stellvertretend für alle Submodule 24, 26 der Aufbau des ersten Submoduls 24 beschrieben werden. Dazu wird stellvertretend für alle Strompfade 42 bis 46 der Aufbau des ersten Strompfades 42 erläutert.

Das erste Submodul 24 weist eine erste Halbbrücke 52, eine Vollbrücke 54 und einen Zwischenkreiskondensator 55 auf, die miteinander parallel verschaltet sind. In FIG 2 ist der Übersichtlichkeit halber nur die Vollbrücke 54 des ersten Strompfads 42 mit einer gestrichelten Linie umrissen und mit einem Bezugszeichen versehen. Die Vollbrücken 54 der restlichen Strompfade 44, 46 sind in FIG 2 zwar eingezeichnet, ihre Andeutung durch ein Bezugszeichen würde die Lesbarkeit der FIG 2 jedoch unnötig erschweren.

Die erste Halbbrücke 52 weist einen ersten Schalter 56 und einen dazu in Reihe geschalteten zweiten Schalter 58 auf. Die Schalter 56, 58 bestehen in der vorliegenden Ausführung jeweils aus einem nicht näher referenzierten MOSFET (Metalloxid-Feldeffekttransistor) und jeweils einer dazu parallel geschalteten Freilaufdiode.

Die erste Teilspannung 28 ist an den ersten Schalter 56 angelegt, während der zweite Schalter 58 in Reihe zwischen dem ersten Schalter 56 und der Vollbrücke 54 geschaltet ist. Somit kann der erste Schalter 56 aus Sicht der Vollbrücke 54 den Eingang aus der Batterie 8 kurzschließen, während der zweite Schalter 58 (bei geöffneten ersten Schalter 56) die Vollbrücke 54 in den Strompfad der Batterie 8 legen kann. Werden in jedem Submodul 24, 26 die Schalter 56, 58 in gleicher Weise abwechselnd geöffnet und geschlossen, ist gemeinsam mit der Induktivität 22 ein Hochsetzsteller geschaffen, der die Summe der Teilspannungen 28, 30 höher setzt, als die Batteriespannung 18. Weiterhin kann durch die erste Halbbrücke 52 das erste Submodul 24 auch dauerhaft aus der Reihenschaltung der zwei Submodule 24, 26 entfernt werden, wenn der erste Schalter 56 dauerhaft geschlossen bleibt.

Die Vollbrücke 54 ist als Vierquadrantensteller ausgeführt, der eine erste und zweite nicht näher referenzierte Halbbrücke aufweist. Beide Halbbrücken sind im Wesentlichen analog zur ersten Halbbrücke 52 aufgebaut. Die erste Teilspannung 28, die über den Zwischenkreiskondensator 55 stabilisiert wird, kann durch eine geeignete Ansteuerung der Vollbrücke 54 in eine Wechselspannung 60 umgewandelt werden. Die Wechselspannung 60 ist wieder der Übersichtlichkeit halber nur für den ersten Strompfad 42 in FIG 2 eingezeichnet. Die Wechselspannung 60 wird an die erste Last 10 angelegt und ruft einen entsprechenden Wechselstrom 62 durch die erste Last 10 hervor. Gibt die erste Last 10 elektrische Energie an die als Vierquadrantensteller ausgeführte Vollbrücke 50 ab, so kann dieser den entsprechenden Leistungsfluss zurück in das erste Submodul 24 leiten. Die Ansteuerung der Vollbrücke 54 ist dem Fachmann bekannt und soll nachstehend nicht weiter erläutert werden.

Die erste Last 10 weist in der vorliegenden Ausführung eine Anzahl an Strompfaden 66, 68, 70 auf, die der Anzahl der Strompfade 42 bis 46 des ersten Submoduls 24 entspricht. Entsprechendes gilt für die zweite Last 12. Dabei ist jeder Strompfad 66, 68, 70 der ersten Last 10 entsprechend mit einem Strompfad 42 bis 46 des Submoduls 24 elektrisch verbunden. In gleicher Weise sind die Strompfade 42 bis 46 der Submodule 24, 26 untereinander entsprechend elektrisch miteinander verbunden. In den Strompfaden 66 bis 70 der ersten Last 10, die wie bereits erwähnt als Motorwicklungsabschnitt ausgeführt ist, sind jeweils Einzelmotorwicklungen 72 bis 76 verschaltet.

In der vorliegenden Ausführung umfasst jedes Submodul 24, 26 in jedem Strompfad 42 bis 46 eine Einzelinduktivität 64. Diese Einzelinduktivitäten 64 können die Induktivität 22 ersetzen oder die Induktivität 22 in ihrer Funktion ergänzen.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (24,26) in Reihenschaltung, die über eine Induktivität (22) elektrische Leistung aus einer eine Gleichspannung (18) abgebenden Leistungsquelle (8) bezieht,
- wobei jedes Submodul (24,26) eingangsseitig eine einphasige Halbbrücke und lastseitig eine einphasige Vollbrücke aufweist, und
- wobei die Halbbrücke und die Vollbrücke gleichspannungsseitig sowie parallel hierzu ein Zwischenkreiskondensator geschaltet sind,
**dadurch gekennzeichnet , dass** in jedem Submodul (24,26) wenigstens eine elektrische Leitung aus mehreren zueinander parallel geschalteten Strompfade (42 bis 46) gebildet ist.

2. Stromrichterschaltung (4) nach Anspruch 1, wobei die Vollbrücke aus einer Anzahl der Strompfade (42 bis 46) entsprechenden Anzahl an Einzelvollbrücken (54) aufgebaut und jeder Strompfad (42 bis 46) durch eine der Einzelvollbrücken (54) geführt ist.

3. Stromrichterschaltung (4) nach Anspruch 2, wobei an einen Ausgang jeder Einzelvollbrücke (54) jeweils ein Strompfad (66 bis 70) der elektrischen Last (6) kontaktierbar ist.

4. Stromrichterschaltung (4) nach einem der vorstehenden Ansprüche, wobei der Zwischenkreiskondensator aus einer Anzahl der Strompfade (42 bis 46) entsprechenden Anzahl an Einzelzwischenkreiskondensatoren (55) aufgebaut ist und jeder Einzelzwischenkreiskondensator (55) mit einem der Strompfade (42 bis 46) kontaktiert ist.

5. Stromrichterschaltung (4) nach einem der vorstehenden Ansprüche, wobei die Halbbrücke aus einer Anzahl der Strompfade entsprechenden Anzahl an Einzelhalbbrücken (52) aufgebaut ist, wobei jede Einzelhalbbrücke (52) mit einem der Strompfade (42 bis 46) verbunden ist.

6. Stromrichterschaltung (4) nach Anspruch 5, wobei jede Einzelhalbbrücke (52) eingangsseitig mit einer Einzelinduktivität (64) verbunden ist.

7. Stromrichterschaltung (4) nach einem der vorstehenden Ansprüche, umfassend einen Potenzialausgleich (48,50), an dem die einzelnen Strompfade (42 bis 46) miteinander elektrisch verbunden sind.

8. Leiterplatte (40) umfassend eine Stromrichterschaltung (4) nach einem der vorstehenden Ansprüche.

9. Elektromotor umfassend Motorwicklungen (10,12) zum Antreiben eines Rotors und eine Leiterplatte (40) nach Anspruch 8 zur elektrischen Energieversorgung der Rotorwicklungen (10, 12).

10. Elektromotor nach Anspruch 9, wobei die Motorwicklung (10,12) aus einer Anzahl der Strompfade (42 bis 46) entsprechenden Anzahl an Einzelwicklungen (72 bis 76) aufgebaut ist und jede Einzelwicklung (72 bis 76) mit einem der Strompfade (42 bis 46) elektrisch verbunden ist.

11. Fahrzeug umfassend einen Elektromotor nach einem der Ansprüche 9 oder 10 zu seinem Antrieb.
